# EUROPÄISCHE PATENTSCHRIFT

(11) **EP 2 571 602 B1**
(45) Veröffentlichungstag und Bekanntmachung des Hinweises auf die Patenterteilung: **16.09.2015**
(21) Anmeldenummer: 11721482.5
(22) Anmeldetag: 16.05.2011
(51) Int. Cl.: B01D 53/86, B01J 23/34, C23C 24/04, C23C 30/00, B01J 37/02, B01J 23/889

(54) **BAUTEIL MIT EINER KATALYTISCHEN OBERFLÄCHE, VERFAHREN ZU DESSEN HERSTELLUNG UND VERWENDUNG DIESES BAUTEILS**
COMPONENT HAVING A CATALYTIC SURFACE, METHOD FOR PRODUCING SAME, AND USE OF SAID COMPONENT
PIÈCE POURVUE D'UNE SURFACE CATALYTIQUE, PROCÉDÉ DE FABRICATION ET UTILISATION DE LADITE PIÈCE

(30) Priorität: 21.05.2010 DE 102010021554
(43) Veröffentlichungstag der Anmeldung: 27.03.2013
(73) Patentinhaber: Siemens Aktiengesellschaft, 80333 München (DE)
(72) Erfinder: ARNDT, Axel, 10961 Berlin (DE); DOYE, Christian, 13156 Berlin (DE); KRÜGER, Ursus, 14089 Berlin (DE); PYRITZ, Uwe, 13599 Berlin (DE)
(86) Internationale Anmeldenummer: PCT/EP2011/057884
(87) Internationale Veröffentlichungsnummer: WO 2011/144568

(56) Entgegenhaltungen:
- EP-A1- 0 369 163
- EP-A2- 0 399 302
- WO-A1-2004/029327
- US-A- 3 701 822
- US-A- 5 011 752
- US-A1- 2003 228 414
- US-B1- 6 281 159
- US-B1- 6 338 830
- SÖNKE SCHMACHTEL ET AL: "New oxygen evolution anodes for metal electrowinning: MnO2 composite electrodes", JOURNAL OF APPLIED ELECTROCHEMISTRY, KLUWER ACADEMIC PUBLISHERS, DO, Bd. 39, Nr. 10, 6. Mai 2009 (2009-05-06), Seiten 1835-1848, XP019749441, ISSN: 1572-8838, DOI: DOI:10.1007/S10800-009-9887-1

## Beschreibung

Die Erfindung betrifft ein Bauteil mit einer Katalysator-Oberfläche. Außerdem betrifft die Erfindung ein Verfahren zum Herstellen einer Katalysator-Oberfläche auf einem Bauteil durch Kaltgasspritzen. Zuletzt betrifft die Erfindung eine Verwendung eines solchen Bauteils.

Eine Katalysatoroberfläche auf einem Bauteil ist beispielsweise gemäß der US 2003/0228414 A1 bekannt. Diese Katalysator-Oberfläche kann durch ein direktes Abscheiden einer katalytisch wirksamen Substanz auf dem Bauteil erzeugt werden. Hierzu wird ein Kaltgasspritzen verwendet, bei dem die Partikel des katalytischen Schichtwerkstoffes in einen sogenannten Kaltgasstrahl, einem mit Überschallgeschwindigkeit strömenden Prozessgas, eingespeist werden. In dem Kaltgasstrahl werden diese Partikel zur Oberfläche des zu beschichtenden Bauteils hin beschleunigt und bleiben unter Umwandlung ihrer kinetischen Energie auf dieser Oberfläche haften.

Schmachtel et al. (J. Appl. Electrochem. (2009) 39:1835-1848) offenbart eine Methode zur Herstellung einer Katalysatoroberfläche, wobei MnO₂-Mikropartikel mittels Kaltgasspritzen auf eine Bleimatrix unter Bildung einer MnO₂/Pb Kompositstruktur aufgebracht werden.

EP 0399302 A2 offenbart die Verwendung von MnO₂ als Katalysatormaterial für die Ozonzersetzung, wobei die katalytischen Eigenschaften des MnO₂ durch die Anwesenheit von Fe, Co, Ni, Cu, Ag, Au, Pt, Pd und/oder Rh verbessert werden können.

Die Aufgabe der Erfindung liegt darin, ein Bauteil mit einer Katalysator-Oberfläche, ein Verfahren zu dessen Herstellung bzw. eine Verwendung dieses Bauteils anzugeben, wobei die Katalysator-Oberfläche eine vergleichsweise hohe katalytische Aktivität aufweisen soll.

Diese Erfindung wird mit dem eingangs genannten Bauteil bzw. mit einem Kaltpritzverfahren dadurch gelöst, dass die Katalysator-Oberfläche aus metallischen Bereichen und ersteren berührenden Bereichen des MnO₂ besteht, wobei die Bereiche aus MnO₂ aus Nanopartikeln mit einem Durchmesser > 100 nm bestehen.

Die Bereiche des MnO₂ stellen den keramischen Anteil der Katalysatoroberfläche dar und werden in diesem Zusammenhang im Folgenden auch als keramische Bereiche bezeichnet. Erfindungsgemäß ist außerdem vorgesehen, dass die metallischen Bereiche aus Co oder Sn oder Zn oder Legierungen mindestens eines dieser Metalle bestehen. Als Legierungen dieser Metalle sind alle Legierungen zu verstehen, die Co und/oder Sn und/oder Zn als Legierungsbestandteile enthalten, wobei der Gesamtanteil dieser Metalle (unabhängig davon, ob eines, zwei oder drei dieser Metalle in der Legierung enthalten sind) bei über 50 Gew-% liegt. Weitere Legierungsbestandteile wie zum Beispiel andere Metalle können somit mit einem Anteil von unter 50 Gew-% vertreten sein. Ist im Folgenden verkürzt von Co und/oder Sn und/oder Zn die Rede oder wird im Zusammenhang mit der erfindungsgemäßen Metall-Keramik-Oberflächenpaarung allgemein auf metallische Bereiche oder eine metallische Matrix Bezug genommen, so ist immer ein Material aus Co oder Sn oder Zn oder Legierungen mindestens eines dieser Metalle, wie oben beschrieben, gemeint.

Um die erfindungsgemäße Schicht herzustellen, ist vorzusehen, dass bei dem Kaltgasspritzen die Katalysatoroberfläche durch Spritzen von MnO₂-Nanopartikeln mit einem Durchmesser > 100 nm erzeugt wird, wobei das MnO₂ nur Bereiche der Katalysator-Oberfläche bildet und außerdem metallische Bereiche der Katalysator-Oberfläche zur Verfügung gestellt werden, die jeweils an die Bereiche des MnO₂ angrenzen. Die metallischen Bereiche können, wie nachfolgend noch näher erläutert wird, durch die zu beschichtende metallische Oberfläche des Bauteils oder durch Zumischung metallischer Partikel in den Kaltgasstrahl zur Verfügung gestellt werden. Sollen die oben angegebenen Legierungen erzeugt werden, so kann dies entweder durch Verwendung von Pulvern aus der gewünschten Legierung geschehen, oder es werden Partikel unterschiedlicher Zusammensetzung miteinander gemischt, um zu der gewünschten Legierungszusammensetzung zu kommen, beispielsweise Partikel aus reinem Co und/oder Sn und/oder Zn. Letzteres Verfahren wird auch als mechanisches Legieren bezeichnet.

Durch die Verwendung von MnO₂ als Paarung mit einem der genannten Metalle lässt sich erfindungsgemäß eine besonders hohe katalytische Aktivität der gebildeten Katalysator-Oberfläche erreichen. Es hat sich überraschenderweise gezeigt, dass sich die katalytische Aktivität von MnO₂, die an sich bekannt ist, durch die metallischen Bereiche an der Oberfläche erhöhen lassen, obwohl insgesamt die zur Verfügung stehende katalytische Oberfläche des MnO₂ verringert wird. Dies widerspricht dem an sich zu erwartenden Ergebnis, dass mit einer Verringerung der real zur Verfügung stehenden Oberfläche an MnO₂ bei nicht vollständiger Bedeckung der Oberfläche des Bauteils ein hierzu proportionaler Verlust an Katalysatoraktivität einhergehen sollte.

Damit lassen sich vorteilhaft Bauteile mit vergleichsweise effizienten Katalysator-Oberflächen herstellen, indem Bereiche der Katalysator-Oberfläche statt mit MnO₂ mit einem Metall belegt werden. Die Oberfläche des Bauteils darf also nicht vollständig mit den metallischen Bereichen und den Bereichen des MnO₂ bedeckt sein. Es genügt bereits eine partielle Beschichtung, um die katalytische Wirkung zu erzielen. Diese ist in Abhängigkeit vom Anwendungsfall so groß zu wählen, dass die zur Verfügung stehende katalytische Oberfläche für den gewünschten Effekt zur Umwandlung beispielsweise von Ozon ausreicht. Der Bereich des MnO₂ im Verhältnis zu der durch beide Bereiche gebildeten Gesamtfläche soll mindestens 10 %, bevorzugt 30 bis 70 %, insbesondere 50 % betragen.

Gemäß einer vorteilhaften Ausgestaltung der Erfindung ist vorgesehen, dass das MnO₂ zumindest teilweise in der γ-Modifikation vorliegt. Die γ-Modifikation ist ein Gefügeaufbau des durch das MnO₂ gebildeten Kristalls, welcher vorteilhaft eine besonders starke katalytische Wirkung zeigt. Allerdings liegt das reale Gefüge des MnO₂ im Allgemeinen nicht ausschließlich in der γ-Modifikation, sondern teilweise auch in anderen Modifikationen vor (z. B. der β-Modifikation des MnO₂). Allerdings sollte nach einer besonderen Ausgestaltung der Erfindung der Gefügeanteil des MnO₂ in der γ-Modifikation bei über 50 Gew.-% liegen.

Gemäß einer anderen Ausgestaltung der Erfindung ist vorgesehen, dass das Bauteil aus dem den metallischen Bereich zur Verfügung stellenden Metall besteht und eine nur teilweise deckende Schicht aus MnO₂ auf dieses Bauteil aufgebracht ist. Hierbei handelt es sich beispielsweise um Bauteile aus Co und/oder Sn und/oder Zn , die aufgrund ihrer Materialzusammensetzung den einen für die Herstellung der katalytischen Oberfläche erforderlichen Bestandteil bereits zur Verfügung stellen. Auf diesen Bauteilen ist eine Herstellung der erfindungsgemäßen Oberfläche vorteilhaft besonders einfach möglich, indem eine nicht deckende Schicht, die den anderen Bereich der Oberfläche, nämlich MnO₂, zur Verfügung stellt, aufgebracht wird.

Anders herum ist es auch denkbar, dass das Bauteil aus einer den Bereich des MnO₂ zur Verfügung stellenden Keramik besteht und eine nur teilweise deckende Schicht aus dem Metall auf dieses Bauteil aufgebracht ist. Beispielsweise könnte das Bauteil als verschleißbeanspruchtes Keramikbauteil ausgelegt sein. Dieses muss auch nicht ausschließlich aus MnO₂ bestehen. Beispielsweise ist es denkbar, dass die Keramik als Sinterkeramik aus unterschiedlichen Arten von Partikeln hergestellt wird, wobei das MnO₂ eine Art dieser Partikel darstellt. Zu berücksichtigen ist bei dieser Variante jedoch, dass die Verarbeitungstemperaturen für das Bauteil unterhalb von 535°C liegen müssen, da das MnO₂ bei dieser Temperatur in MnO umgewandelt wird und damit seine hervorragenden katalytischen Eigenschaften in der erfindungsgemäßen Werkstoffpaarung einbüßt.

Gemäß einer anderen Ausgestaltung der Erfindung ist vorgesehen, dass das Bauteil eine Beschichtung aufweist, welche die metallischen Bereiche und die Bereiche des MnO₂ der Oberfläche zur Verfügung stellt. Bei dieser Variante können Bauteile verschiedener Materialien beschichtet werden, wobei die erfindungsgemäßen katalytischen Eigenschaften der Schicht vorteilhaft alleine durch die Beschaffenheit der Schicht bzw. der durch diese gebildeten katalytischen Oberfläche hervorgerufen wird. Hierbei muss jeweils für den betreffenden Werkstoff des Bauteils ein geeignetes Beschichtungsverfahren ausgewählt werden.

Besonders vorteilhaft kann das Bauteil eine gitterförmige Struktur aufweisen. Dies kann ein Gitter mit einer zweidimensionalen Ausrichtung sein, also ein im Wesentlichen flach ausgebildetes Bauteil. Es ist aber auch möglich, dreidimensionale Gitterstrukturen auszubilden, die sich beispielsweise mittels Rapid Prototyping Technologien herstellen lassen. Die gitterförmigen Strukturen bieten den wesentlichen Vorteil, dass einerseits die für die Aufbringung der katalytischen Wirkpartner zur Verfügung stehenden Oberfläche vergrößert wird, andererseits allerdings der durch die Gitterstruktur erzeugte Strömungswiderstand vergleichsweise gering ausfällt. Gitterförmige Bauteile können daher vorteilhaft in Lüftungskanälen angewendet werden. Besonders vorteilhaft ist die Anwendung beispielsweise bei Dunstabzugshauben, wobei die gitterförmige Struktur deren Auslassgitter für gereinigte Abluft bildet. Diese Anwendung wird bei sogenannten Umlufthauben verwendet, bei denen im Gegensatz zu Ablufthauben die angesaugte Luft nicht aus dem Gebäude abgeführt wird, sondern in diesem verbleibt.

Um bei Dunstabzugshauben nach dem Umluftprinzip nicht nur eine Reinigung der Luft von Feststoffen, Aerosolen und Kleinstpartikeln zu erreichen, wie diese beispielsweise im Kochdunst enthalten sind, sondern auch eine Reinigung von Gerüchen zu erreichen, werden nach dem Stand der Technik Plasmageneratoren verwendet, die eine Hochspannungs-Entladungsquelle aufweisen, mit der die Luft mit atomarem Sauerstoff angereichert wird. Dieser bewirkt einen Zersetzungs- bzw. Oxidationsprozess, der die für die Geruchsentstehung verantwortlichen Kohlenstoffverbindungen aufspaltet und die Gerüche auf diese Weise eliminiert. Bei diesem Prozess entsteht jedoch auch Ozon, welches durch die erfindungsgemäßen Bauteile auf katalytischem Wege in zweiatomigen Sauerstoff umgewandelt werden kann. Hierdurch können vorteilhaft Aktivkohlefilter eingespart werden, welche der Luftströmung der Dunstabzugshaube nachteilhaft einen vergleichsweise hohen Luftwiderstand entgegensetzen und außerdem in regelmäßigen Abständen ausgetauscht werden müssen.

Als Verfahren zur Herstellung der Schicht auf dem Bauteil kann beispielsweise ein Kaltgasspritzen verwendet werden, wobei die katalytische Oberfläche durch Spritzen von MnO₂-Partikeln erzeugt wird. Dabei bildet das MnO₂ nur Bereiche der katalytischen Oberfläche, die metallischen Bereiche werden aus Co oder Sn oder Zn oder Legierungen mindestens eines dieser Metalle gebildet. Die metallischen Bereiche können, wie bereits beschrieben, entweder durch das Bauteil selbst zur Verfügung gestellt werden, oder sie werden als Partikel dem Kaltgasstrahl zugegeben, so dass die metallischen Bereiche der Oberfläche durch die sich ausbildende Schicht mitgebildet werden.

Insbesondere können auch MnO₂-Partikel verwendet werden, die zumindest teilweise die γ-Modifikation des MnO₂-Gefüges aufweisen. Dabei muss das Kaltgasspritzen mit Betriebstemperaturen auf jeden Fall unterhalb der Zersetzungstemperatur der γ-Modifikation betrieben werden. Diese Temperatur liegt bei 535°C. Prozesstechnisch kann bei der Wahl der Temperatur des Kaltgasstrahls ein gewisser Sicherheitsabstand zu dieser Zersetzungstemperatur eingehalten werden. Dagegen hat es sich gezeigt, dass ein kurzzeitiges Überschreiten dieser Temperatur beim Auftreffen der MnO₂-Partikel auf die Oberfläche gefügetechnisch keine Auswirkungen hat, weil diese Temperaturerhöhung extrem lokal nur im Oberflächenbereich der verarbeiteten MnO₂-Partikel auftritt. Der jeweilige Kern der Partikel, der in einem unkritischen Temperaturbereich bleibt, vermag die γ-Modifikation des Partikelgefüges anscheinend genügend zu stabilisieren, so dass die γ-Modifikation des MnO₂-Gefüges auch auf der katalytisch wirksamen Oberfläche der Partikel erhalten bleibt.

Außerdem führt eine Erwärmung des MnO₂ über 450°C an sich zu einer Umwandlung des MnO₂ in Mn₂O₃. Dieser Prozess schreitet jedoch nur langsam voran, so dass eine kurzfristige Überschreitung der Temperatur, wie sie beim Kaltgasspritzen auftritt, unschädlich ist.

Um die hervorragenden katalytischen Eigenschaften des MnO₂ zu erhalten, muss die γ-Modifikation des Gefüges zumindest teilweise in den MnO₂-Partikeln enthalten sein. Dies kann durch ein Gemisch der MnO₂-Partikel mit Manganoxidpartikeln anderer Modifikationen (z. B. β-Modifikation des MnO₂) verwirklicht sein. Eine andere Möglichkeit besteht darin, dass die Partikel aus Phasengemischen bestehen, so dass die γ-Modifikation des MnO₂ nicht als einzige in den Partikeln vorliegt.

Weiterhin ist es von Vorteil, wenn als MnO₂-Partikel Nanopartikel mit einem Durchmesser > 100 nm verarbeitet werden. Unter Nanopartikel im Sinne dieser Erfindung sind Partikel zu verstehen, die < 1 µm im Durchmesser sind. Es hat sich nämlich überraschenderweise gezeigt, dass sich derart kleine Partikel aus MnO₂ mit einem hohen Abscheidewirkungsgrad auf der katalytischen Oberfläche abscheiden lassen. Normalerweise wird demgegenüber davon ausgegangen, dass sich Partikel von weniger als 5 µm durch Kaltgasspritzen nicht abscheiden lassen, da aufgrund der geringen Masse dieser Partikel die durch den Kaltgasstrahl eingeprägte kinetische Energie zur Abscheidung nicht ausreicht. Warum dies speziell für MnO₂-Partikel nicht gilt, kann nicht genau begründet werden. Anscheinend sind neben dem Effekt der kinetischen Deformation auch andere Haftungsmechanismen bei dem Schichtbildungsprozess im Spiel.

Die Verarbeitung von Nanopartikeln des MnO₂ hat den Vorteil, dass mit vergleichsweise wenig Material eine vergleichsweise hohe spezifische Oberfläche und damit eine starke Ausprägung der katalytischen Wirkung erreicht werden kann. Auch die Grenzlinien zwischen den Bereichen des MnO₂ und metallischen Bereichen der katalytischen Oberfläche werden auf diese Weise vorteilhaft stark verlängert, was sich ebenfalls auf eine hohe Ausprägung der katalytischen Eigenschaften auswirkt.

Von Vorteil ist es, wenn ein Gemisch aus MnO₂-Partikeln und metallischen Partikeln aus Co oder Sn oder Zn oder Legierungen mindestens eines dieser Metalle für die metallischen Bereiche der katalytischen Oberfläche verwendet wird. Insbesondere kann dann durch geeignete Wahl von Temperatur und Partikelgeschwindigkeit im Kaltgasstrahl der Energieeintrag in die Partikel so gesteuert werden, dass die die katalytische Oberfläche bildende spezifische (oder innere) Oberfläche der hergestellten Schicht gesteuert wird. Durch eine höhere Porosität der hergestellten Schicht lässt sich nämlich die innere Oberfläche vergrößern, um eine vergrößerte katalytische Oberfläche zur Verfügung zu stellen. Hierdurch kann die keimtötende Wirkung also vergrößert werden. Demgegenüber kann es aber auch von Vorteil sein, wenn die Oberfläche möglichst glatt ausgebildet ist, um einer Verschmutzungsneigung entgegenzuwirken.

Neben der Abscheidung durch Kaltgasspritzen sind selbstverständlich auch andere Herstellungsverfahren denkbar. Beispielsweise kann die katalytische Oberfläche elektrochemisch hergestellt werden. Dabei wird der metallische Bereich der katalytischen Oberfläche als Schicht elektrochemisch aus einem Elektrolyt abgeschieden, in dem Partikel des MnO₂ suspendiert sind. Diese werden während des elektrochemischen Abscheideprozesses dann in die sich ausbildende Schicht eingebaut und bilden damit auch einen Anteil des MnO₂ an der Oberfläche der Schicht.

Ein weiteres Verfahren kann dadurch erhalten werden, dass die Schicht aus einer MnO₂ zumindest enthaltenden Keramik hergestellt wird. Zu diesem Zweck kann eine Mischung aus präkeramischen Polymeren, die Vorstufen der gewünschten Keramik bilden, und Metallpartikeln in einer Lösung auf das zu beschichtende Bauteil aufgetragen werden. Zunächst wird das Lösungsmittel verdampft, anschließend kann durch eine Wärmebehandlung, die vorteilhaft unterhalb der Zersetzungstemperatur der γ-Modifikation des MnO₂ (535°C) liegt, zur Keramik umgewandelt werden. Besser noch bleibt die Temperatur unter 450°C, um die Bildung von Mn₂O₃ zu verhindern.

Mit den genannten Verfahren lassen sich u. a. auch die folgenden Ausgestaltungen des erfindungsgemäßen Bauteils erzeugen. So kann die hergestellte Beschichtung eine metallische Lage aufweisen, auf der eine nur teilweise deckende Lage aus MnO₂ aufgebracht ist. Die metallische Lage bildet damit den metallischen Bereich der Oberfläche, die an den Stellen, wo die Schicht aus MnO₂ nicht deckt, zum Vorschein kommt. Bei dieser Bauteilgestaltung ist vorteilhaft nur ein sehr geringer Bereich des MnO₂ notwendig. Es ist hierbei auch denkbar, die oben aufgeführten Fertigungsverfahren in Kombination anzuwenden. Beispielsweise lässt sich die metallische Lage galvanisch herstellen und die nur teilweise deckende Lage aus MnO₂ durch Kaltgasspritzen.

Eine andere Möglichkeit besteht darin, dass die Beschichtung eine den Bereich des MnO₂ zur Verfügung stellende keramische Lage aufweist, auf der eine nur teilweise deckende metallische Lage aufgebracht ist. Diese Gestaltung des Bauteils ist von Bedeutung, wenn die Eigenschaften der keramischen Schicht konstruktiv bedingt für das Bauteil von Vorteil sind (beispielsweise Korrosionsschutz).

Auch ist es möglich, dass die Beschichtung aus einer den Bereich des MnO₂ zur Verfügung stellenden Keramik besteht, in die metallische Partikel eingebettet sind. Dies ist insbesondere dann von Vorteil, wenn die keramische Schicht verschleißbeansprucht ist und bei fortschreitendem Verschleiß, d. h. Abtrag der Schicht, ihre katalytischen Eigenschaften beibehalten soll. Letzteres wird dadurch gewährleistet, dass beim Abtrag der Keramikschicht immer wieder MnO₂-Partikel freigelegt werden, welche den erfindungsgemäßen Bereich des MnO₂ an der Oberfläche gewährleisten. Natürlich ist es auch denkbar, dass die Schicht eine metallische Matrix aufweist, in die die Partikel aus MnO₂ eingebettet sind. Auch für diese Schicht gilt das Argument, dass bei einem Schichtabtrag die katalytischen Eigenschaften derselben erhalten bleiben.

Das Bauteil kann auch so ausgeführt sein, dass dieses oder eine auf dieses aufgebrachte Schicht aus einer von dem metallischen Bereich und vom MnO₂ verschiedenen Material besteht und in diesem (bei Verschleißbeanspruchung, s. oben) und/oder auf diesem Partikel vorhanden sind, welche jeweils die metallischen Bereiche und die Bereiche des MnO₂ an ihrer Oberfläche (gemeint ist die Oberfläche der Partikel) zur Verfügung stellen. Hierbei handelt es sich vorteilhaft um maßgeschneiderte Partikel mit katalytischen Eigenschaften, welche universell auf jede Oberfläche oder in jede Matrix eingebracht werden können. Hierbei muss jeweils das zur Einbringung bzw. Aufbringung geeignete Verfahren gewählt werden. Mit dieser Maßnahme lassen sich beispielsweise auch Bauteile aus Kunststoff mit katalytischen Eigenschaften herstellen. Die in die Schicht oder das Bauteil eingebrachten Partikel werden entweder bei einer Verschleißbeanspruchung freigelegt bzw. können bei einer porösen Struktur des Bauteils auch an der katalytischen Wirkung beteiligt sein, wenn diese die Wände der Poren bilden.

Zuletzt betrifft die Erfindung eine Verwendung des bereits beschriebenen Bauteils zur Verringerung des Ozon-Gehaltes eines die Katalysator-Oberfläche überstreichenden Gases. Dieses Gas kann vorrangig durch die Erdatmosphäre zur Verfügung gestellt werden. Unter bestimmten Bedingungen ist die Luft mit Ozon angereichert, z. B. an heißen Sommertagen im Innenstadtbereich oder auch in höheren Atmosphärenschichten, die durch den Flugverkehr genutzt werden. Da Ozon gesundheitsschädlich auf den menschlichen Organismus wirkt, kann die Atemluft, die aus der Atmosphäre in den Innenraum von KFZ oder auch in die Fahrgastkabine eines Flugzeugs gepumpt wird, mittels der erfindungsgemäßen Katalysator-Oberfläche weitgehend von Ozon befreit werden. Außerdem ist der Ozongehalt beispielsweise im Abluftbereich von Dunstabzugshauben mit sogenannten Plasma-Reinigungseinheiten für die Abluft erhöht. Selbstverständlich sind auch Anwendungen in der chemischen Verfahrenstechnik denkbar.

Die Katalysatoroberfläche kann beispielsweise als Innenauskleidung von Luft führenden Leitungssystemen ausgestaltet werden. Dies hat den Vorteil, dass durch Vorsehen der Katalysator-Oberfläche kein zusätzliches Strömungshindernis in die Luft führenden Kanäle eingebaut werden muss. Um die zur Verfügung stehende Katalysator-Oberfläche zu vergrößern, kann das Luftführungssystem auch mit einem luftdurchlässigen Einsatz versehen werden, welcher durch die angesaugte Luft umströmt werden muss.

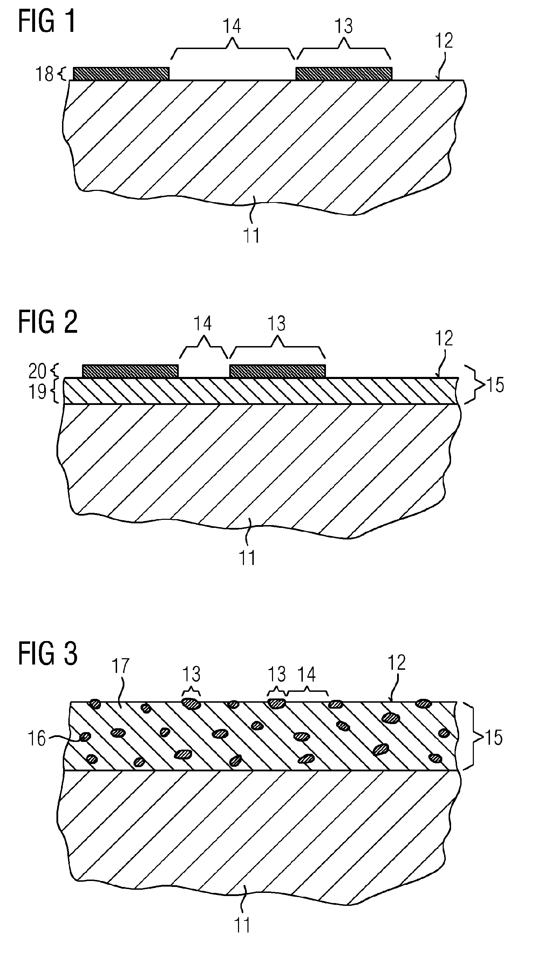

Weitere Einzelheiten der Erfindung werden nachfolgend anhand der Zeichnung beschrieben. Gleiche oder sich entsprechende Zeichnungselemente sind in den einzelnen Figuren mit den gleichen Bezugszeichen versehen und werden nur insoweit mehrfach erläutert, wie sich Unterschiede zwischen den einzelnen Figuren ergeben. Es zeigen die Figuren 1 bis 5 unterschiedliche Ausführungsbeispiele des erfindungsgemäßen Bauteils mit verschiedenen katalytischen Oberflächen und

Die Figuren 1 bis 5 zeigen jeweils ein Bauteil 11 mit einer Oberfläche 12, die katalytische Eigenschaften aufweist. Diese Eigenschaften werden dadurch erzeugt, dass die Oberfläche jeweils einen Bereich 13 hat, der aus MnO₂ besteht und weiterhin ein metallischer Bereich 14 aus Co und/oder Sn und/oder Zn zur Verfügung gestellt wird. Das Bauteil könnte beispielsweise ein Luftführungskanal sein, dessen Innenwände die besagte Oberfläche bilden.

Der Aufbau der Bauteile 11, der jeweils im Schnitt dargestellt ist, weist jedoch Unterschiede auf. Das Bauteil gemäß Figur 1 besteht selbst aus Co und/oder Sn und/oder Zn, so dass dessen Oberfläche 12 automatisch den metallischen Bereich 14 zur Verfügung stellt. Auf der Oberfläche 12 sind weiterhin inselartige Bereiche aus MnO₂ gebildet, die den Bereich 13 zur Verfügung stellen. Diese können beispielsweise als nicht deckende Beschichtung durch Kaltgasspritzen aufgebracht werden.

Gemäß Figur 2 ist ein Bauteil 11 dargestellt, welches aus einem zur Erzeugung der katalytischen Eigenschaften der Oberfläche ungeeigneten Material besteht. Daher wird auf dieses Bauteil 11 eine metallische Schicht 15 aus Co und/oder Sn und/oder Zn aufgebracht. Auf dieser Schicht, die den Bereich 14 zur Verfügung stellt, wird MnO₂ in der zu Figur 1 beschriebenen Weise aufgebracht, so dass auch Bereiche 13 der Oberfläche 12 entstehen.

In Figur 3 ist dargestellt, dass die metallische Schicht auch mit Partikeln 16 aus MnO₂ dotiert sein kann, d. h., dass sich diese Partikel in der metallischen Matrix 17 der metallischen Schicht 15 befinden. Insofern bilden sie auch denjenigen Teil der Oberfläche 12, der den Bereich 13 zur Verfügung stellt. Der Rest der Oberfläche bildet den Bereich 14.

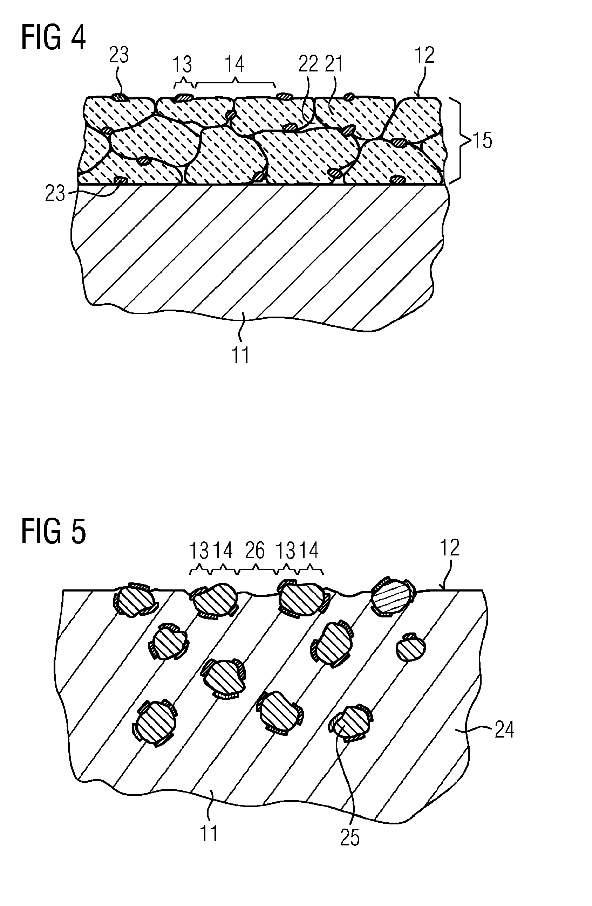

In Figur 4 wird die Beschichtung 15 durch eine keramische Matrix 21 gebildet, wobei diese Poren 22 aufweist, welche die innere Oberfläche im Vergleich zur äußeren Oberfläche 12 des Bauteils vergrößern und so auch einen katalytischen Effekt verstärken. In der keramischen Matrix 21 sind metallische Partikel 23 vorgesehen, die sowohl an der Oberfläche 12 den Bereich 13 zur Verfügung stellen, als auch in den Poren katalytisch wirksam werden können. Wie auch bei Figur 2 und Figur 3 kann das Bauteil 11 gemäß Figur 4 aus einem beliebigen Material bestehen, wobei nur die Haftung der Beschichtung 15 auf dem Bauteil 11 sichergestellt werden muss.

Das Bauteil 11 gemäß Figur 5 weist eine Matrix aus einem beliebigen Material 24, z. B. Kunststoff auf. In dieses sind Partikel 25 eingebracht, deren jeweilige Oberfläche sowohl metallische Bereiche aus Co und/oder Sn und/oder Zn wie auch Bereiche des MnO₂ aufweisen. Bei dem Ausführungsbeispiel gemäß Figur 5 bestehen die Partikel selbst aus dem Metall und die keramischen Bereiche sind auf der Oberfläche der Partikel ausgebildet. Denkbar ist selbstverständlich auch der umgekehrte Fall. Die Partikel liegen an der Oberfläche 12 des Bauteils 11 teilweise frei, wodurch die metallischen Bereiche 14 und die Bereiche 13 aus MnO₂ 13 gebildet werden. Weiterhin gibt es Bereiche 26 der Oberfläche 26 aus Kunststoff, welche nicht katalytisch wirksam sind. Das Verhältnis der genannten Bereiche kann direkt durch den Füllgrad von Partikeln 25 in dem Material 24 beeinflusst werden.

## Patentansprüche

1. Bauteil mit einer Katalysator-Oberfläche (12), wobei die Katalysator-Oberfläche (12) aus metallischen Bereichen (14) aus Co oder Sn oder Zn oder Legierungen mindestens eines dieser Metalle und die metallischen Bereiche berührenden Bereichen (13) aus MnO₂ besteht,
**dadurch gekennzeichnet,**
**dass** die Bereiche aus MN02 aus Nanopartikeln mit einem Durchmesser > 100 nm bestehen.

2. Bauteil nach Anspruch 1,
**dadurch gekennzeichnet,**
**dass** das Manganoxid zumindest teilweise in der γ-Modifikation des MnO₂ vorliegt.

3. Bauteil nach Anspruch 2,
**dadurch gekennzeichnet,**
**dass** der in der γ-Modifikation vorliegende Gefügeanteil des Manganoxids bei über 50 Gew.-% liegt.

4. Bauteil nach einem der voranstehenden Ansprüche,
**dadurch gekennzeichnet,**
**dass** der Oberflächenanteil der Bereiche (13) aus MnO₂ im Verhältnis zur Summe der metallischen Bereiche (13) aus Co oder Sn oder Zn oder Legierungen mindestens eines dieser Metalle bei mindestens 10 %, bevorzugt zwischen 30 und 60 % und insbesondere bei 50 % liegt.

5. Bauteil nach einem der voranstehenden Ansprüche,
**dadurch gekennzeichnet,**
**dass** dieses aus einem den metallischen Bereich (13) aus Co oder Sn oder Zn oder Legierungen mindestens eines dieser Metalle zur Verfügung stellenden metallischen Werkstoff besteht und eine nur teilweise deckende Schicht aus MnO₂ auf dieses Bauteil aufgebracht ist.

6. Bauteil nach einem der Ansprüche 1 bis 4,
**dadurch gekennzeichnet,**
**dass** dieses aus einer den Bereich (13) des MnO₂ zur Verfügung stellenden Keramik besteht und eine nur teilweise deckende Schicht aus Co oder Sn oder Zn oder Legierungen mindestens eines dieser Metalle auf dieses Bauteil aufgebracht ist.

7. Bauteil nach einem der Ansprüche 1 bis 4,
**dadurch gekennzeichnet,**
**dass** dieses eine Beschichtung (15) aufweist, welche die metallischen Bereiche (14) aus Co oder Sn oder Zn oder Legierungen mindestens eines dieser Metalle und die Bereiche (13) des MnO₂ der Katalysator-Oberfläche (12) zur Verfügung stellt.

8. Bauteil nach Anspruch 7,
**dadurch gekennzeichnet,**
**dass** die Beschichtung (15) eine metallische Lage (19) aus Co oder Sn oder Zn oder Legierungen mindestens eines dieser Metalle aufweist, auf der eine nur teilweise deckende Lage (20) aus MnO₂ aufgebracht ist.

9. Bauteil nach Anspruch 7,
**dadurch gekennzeichnet,**
**dass** die Beschichtung (15) eine den Bereich (13) des MnO₂ zur Verfügung stellende keramische Lage aufweist, auf der eine nur teilweise deckende metallische Lage aus Co oder Sn oder Zn oder Legierungen mindestens eines dieser Metalle aufgebracht ist.

10. Bauteil nach Anspruch 7,
**dadurch gekennzeichnet,**
**dass** die Beschichtung (15) aus einer den Bereich (13) des MnO₂ zur Verfügung stellenden Keramik besteht, in die metallische Partikel (23) aus Co oder Sn oder Zn oder Legierungen mindestens eines dieser Metalle eingebettet sind.

11. Bauteil nach Anspruch 7,
**dadurch gekennzeichnet,**
**dass** die Beschichtung (15) aus einer metallischen Matrix (17) aus Co oder Sn oder Zn oder Legierungen mindestens eines dieser Metalle besteht, in die Partikel (16) aus MnO₂ eingebettet sind.

12. Bauteil nach einem der Ansprüche 1 bis 5,
**dadurch gekennzeichnet,**
**dass** dieses oder eine auf dieses aufgebrachte Schicht aus einer von dem metallischen Bereich (14) und vom MnO₂ verschiedenen Material (24) besteht und in diesem und/oder auf diesem Partikel (25) vorhanden sind, welche jeweils die metallischen Bereiche (14) aus Co oder Sn oder Zn oder Legierungen mindestens eines dieser Metalle und die Bereiche (13) des MnO₂ an ihrer Oberfläche zur Verfügung stellen.

13. Bauteil nach einem der voranstehenden Ansprüche,
**dadurch gekennzeichnet,**
**dass** das Bauteil eine gitterförmige Struktur aufweist.

14. Bauteil nach Anspruch 13,
**dadurch gekennzeichnet,**
**dass** das Bauteil als Lüftungsgitter, insbesondere als Auslassgitter einer Dunstabzugshaube oder eines durchströmbaren Plasmagenerators ausgebildet ist.

15. Verfahren zum Herstellen einer Katalysator-Oberfläche (12) auf einem Bauteil durch Kaltgasspritzen, wobei die Katalysator-Oberfläche (12) durch Spritzen von MnO₂-Partikeln erzeugt wird, wobei das MnO₂ nur Bereiche (13) der Katalysator-Oberfläche (12) bildet und außerdem metallische Bereiche (14) aus Co oder Sn oder Zn oder Legierungen mindestens eines dieser Metalle der Katalysator-Oberfläche zur Verfügung gestellt werden, die jeweils an die Bereiche (13) des MnO₂ angrenzen,
**dadurch gekennzeichnet,**
**dass** als MnO₂-Partikel Nanopartikel mit einem Durchmesser > 100 nm verarbeitet werden.

16. Verfahren nach Anspruch 15,
**dadurch gekennzeichnet,**
**dass** MnO₂-Partikel verwendet werden, die zumindest teilweise die γ-Modifikation des MnO₂-Gefüges aufweisen und das Kaltgasspritzen mit Betriebstemperaturen unterhalb der Zersetzungstemperatur von Manganoxid betrieben wird.

17. Verfahren nach einem der Ansprüche 15 bis 16,
**dadurch gekennzeichnet,**
**dass** ein Gemisch aus MnO₂-Partikeln und metallischen Partikeln aus Co oder Sn oder Zn oder Legierungen mindestens eines dieser Metalle für die metallischen Bereiche (14) der Katalysator-Oberfläche verwendet wird.

18. Verfahren nach einem der Ansprüche 15 bis 17,
**dadurch gekennzeichnet,**
**dass** die die Katalysator-Oberfläche bildende spezifische Oberfläche der hergestellten Schicht durch den Energieeintrag in den Kaltgasstrahl gesteuert wird.

19. Verwendung eines Bauteils gemäß einem der Ansprüche 1 bis 12 zur Verringerung des Ozon-Gehaltes eines die Katalysator-Oberfläche überstreichenden Gases.

## Claims

1. Component part with a catalyst surface (12), the catalyst surface (12) consisting of metallic regions (14) of Co or Sn or Zn or alloys of at least one of these metals and regions (13) of MnO₂ in contact with the metallic regions,
**characterized in that**
the regions of MnO₂ consist of nanoparticles having a diameter of > 100 nm.

2. Component part according to Claim 1,
**characterized in that**
the manganese oxide is present at least partly in the γ polymorph of MnO₂.

3. Component part according to Claim 2,
**characterized in that**
the structural proportion of the manganese oxide present in the γ polymorph is more than 50% by weight.

4. Component part according to any of the preceding claims,
**characterized in that**
the surface area proportion of the regions (13) of MnO₂ in relation to the sum of the metallic regions (13) of Co or Sn or Zn or alloys of at least one of these metals, is at least 10%, preferably between 30 and 60% and especially 50%.

5. Component part according to any of the preceding claims,
**characterized in that**
it consists of a metallic materials which provides the metallic region (13) of Co or Sn or Zn or alloys of at least one of these metals, and an only partly covering layer of MnO₂ has been applied to this component part.

6. Component part according to any of Claims 1 to 4,
**characterized in that**
it consists of a ceramic which provides the region (13) of MnO₂, and an only partly covering layer of Co or Sn or Zn or alloys of at least one of these metals has been applied to this component part.

7. Component part according to any of Claims 1 to 4,
**characterized in that**
it has a coating (15) which provides the metallic regions (14) of Co or Sn or Zn or alloys of at least one of these metals and the regions (13) of MnO₂ on the catalyst surface (12).

8. Component part according to Claim 7,
**characterized in that**
the coating (15) has a metallic layer (19) of Co or Sn or Zn or alloys of at least one of these metals, on which an only partly covering layer (20) of MnO₂ has been applied.

9. Component part according to Claim 7,
**characterized in that**
the coating (15) has a ceramic layer which provides the region (13) of MnO₂, on which an only partly covering metallic layer of Co or Sn or Zn or alloys of at least one of these metals has been applied.

10. Component part according to Claim 7,
**characterized in that**
the coating (15) consists of a ceramic which provides the region (13) of MnO₂, into which metallic particles (23) of Co or Sn or Zn or alloys of at least one of these metals have been embedded.

11. Component part according to Claim 7,
**characterized in that**
the coating (15) consists of a metallic matrix composed of Co or Sn or Zn or alloys of at least one of these metals, into which particles (16) of MnO₂ are embedded.

12. Component part according to any of Claims 1 to 5,
**characterized in that**
it or a layer applied thereto consists of a material (24) other than the metallic region (14) and MnO₂, and particles (25) present therein and/or thereon each provide the metallic regions (14) of Co or Sn or Zn or alloys of at least one of these metals and the regions (13) of MnO₂ on the surface thereof.

13. Component part according to any of the preceding claims,
**characterized in that**
the component part has a grid structure.

14. Component part according to Claim 13,
**characterized in that**
the component part is configured as a ventilation grid, especially as an outlet grid of an extractor hood or of a flow-through plasma generator.

15. Process for producing a catalyst surface (12) on a component part by cold gas spraying, the catalyst surface (12) being produced by spraying of MnO₂ particles, the MnO₂ forming only regions (13) of the catalyst surface (12), and also providing metallic regions (14) of Co or Sn or Zn or alloys of at least one of these metals on the catalyst surface, each of which adjoin the regions (13) of MnO₂,
**characterized in that**
the MnO₂ particles processed are nanoparticles having a diameter of > 100 nm.

16. Process according to Claim 15,
**characterized in that**
MnO₂ particles having at least partly the γ polymorph of the MnO₂ structure are used, and the cold gas spraying is conducted with operating temperatures below the decomposition temperature of manganese oxide.

17. Process according to either of Claims 15 and 16,
**characterized in that**
a mixture of MnO₂ particles and metallic particles of Co or Sn or Zn or alloys of at least one of these metals is used for the metallic regions (14) of the catalyst surface.

18. Process according to any of Claims 15 to 17,
**characterized in that**
the specific surface area which forms the catalyst surface of the layer produced is controlled by the energy input into the cold gas jet.

19. Use of a component part according to any of Claims 1 to 12 for reducing the ozone content of a gas which passes over the catalyst surface.

## Revendications

1. Pièce ayant une surface ( 12 ) de catalyseur, la surface ( 12 ) de catalyseur étant constituée de régions ( 14 ) métalliques en Co ou Sn ou en Zn ou en alliages d'au moins l'un de ces métaux et les régions ( 13 ) touchant les régions métalliques étant en MnO₂,
**caractérisée**
**en ce que** les régions en MnO₂ sont constituées de nanoparticules d'un diamètre > 100 nm.

2. Pièce suivant la revendication 1,
**caractérisée**
**en ce que** l'oxyde de manganèse se présente au moins en partie sous la forme γ du MnO₂.

3. Pièce suivant la revendication 2,
**caractérisée**
**en ce que** la proportion de structure, présente sous la forme γ, de l'oxyde de manganèse est supérieure à 50 % en poids.

4. Pièce suivant l'une des revendications précédentes,
**caractérisée**
**en ce que** la proportion en surface des régions ( 13 ) en MnO₂ par rapport à la somme des régions ( 13 ) métalliques en Co ou en Sn ou en Zn ou en alliages d'au moins l'un de ces métaux est d'au moins 10 %, de préférence comprise entre 30 et 60 % et notamment de 50 %.

5. Pièce suivant l'une des revendications précédentes,
**caractérisée**
**en ce qu'**elle est constituée d'un matériau métallique mettant à disposition la région ( 13 ) métallique en Co ou en Sn ou en Zn ou en alliages d'au moins l'un de ces métaux et une couche en MnO₂ ne recouvrant qu'en partie est déposée sur cette pièce.

6. Pièce suivant l'une des revendications 1 à 4,
**caractérisée**
**en ce qu'**elle est constituée d'une céramique mettant à disposition la région ( 13 ) du MnO₂ et une couche ne recouvrant que partiellement en Co ou en Sn ou en Zn ou en alliages d'au moins l'un de ces métaux est déposée sur cette pièce.

7. Pièce suivant l'une des revendications 1 à 4,
**caractérisée**
**en ce qu'**elle a un revêtement ( 15 ) qui met à disposition les régions ( 14 ) métalliques en Co ou en Sn ou en Zn ou en alliages d'au moins l'un de ces métaux et les régions ( 13 ) du MnO₂ de la surface ( 12 ) de catalyseur.

8. Pièce suivant la revendication 7,
**caractérisée**
**en ce que** le revêtement ( 15 ) a une couche ( 15 ) métallique en Co ou en Sn ou en Zn ou en alliages d'au moins de ces métaux, sur laquelle est déposée une couche ( 20 ) en MnO₂ ne recouvrant que partiellement.

9. Pièce suivant la revendication 7,
**caractérisée**
**en ce que** le revêtement ( 15 ) a une couche céramique mettant à disposition la région ( 13 ) du MnO₂ et sur laquelle est déposée une couche métallique ne recouvrant que partiellement en Co ou en Sn ou en Zn ou en alliages d'au moins l'un de ces métaux.

10. Pièce suivant la revendication 7,
**caractérisée**
**en ce que** le revêtement ( 15 ) est en une céramique, mettant à disposition la région ( 13 ) du MnO₂ et dans laquelle des particules ( 23 ) métalliques en Co ou en Sn ou en Zn ou en alliages d'au moins l'un de ces métaux sont incorporées.

11. Pièce suivant la revendication 7,
**caractérisée**
**en ce que** le revêtement ( 15 ) est constitué d'une matrice ( 17 ) métallique en Co ou en Sn ou en Zn ou en alliage d'au moins l'un de ces métaux, dans laquelle des particules ( 16 ) en MnO₂ sont incorporées.

12. Pièce suivant l'une des revendications 1 à 5,
**caractérisée**
**en ce que** cette pièce ou une couche déposée sur celle-ci est constituée d'un matériau (24) différent de la région ( 14 ) métallique et du MnO₂ et il y a dans celui-ci et/ou sur celui-ci des particules ( 25 ) qui mettent à disposition sur la surface respectivement les régions ( 14 ) métalliques en Co ou en Sn ou en Zn ou en alliages d'au moins l'un de ces métaux et les régions ( 13 ) du MnO₂.

13. Pièce suivant l'une des revendications précédentes,
**caractérisée**
**en ce que** la pièce a une structure en forme de grille.

14. Pièce suivant la revendication 13,
**caractérisée**
**en ce que** la pièce est constituée sous la forme d'une grille d'aération, notamment sous la forme d'une grille de sortie d'une hotte d'évacuation des vapeurs ou d'un générateur à plasma pouvant être traversé.

15. Procédé de production d'une surface ( 12 ) de catalyseur sur une pièce, par pulvérisation de gaz froid, la surface ( 12 ) de catalyseur étant produite par pulvérisation de particules de MnO₂, le MnO₂ formant seulement des régions ( 13 ) de la surface ( 12 ) de catalyseur et en outre les régions ( 14 ) métalliques en Co ou en Sn ou Zn ou en alliages d'au moins l'un de ces métaux de la surface de catalyseur étant mises à disposition, régions qui sont voisines respectivement des régions ( 13 ) du MnO₂,
**caractérisé**
**en ce que** l'on utilise comme particules de MnO₂ des nanoparticules d'un diamètre plus grand que 100 nm.

16. Procédé suivant la revendication 15,
**caractérisé**
**en ce qu'**on utilise des particules de MnO₂ qui ont au moins en partie la forme γ de la structure de MnO₂ et on fait fonctionner la pulvérisation de gaz froid à des températures de fonctionnement plus basses que la température de décomposition de l'oxyde de manganèse.

17. Procédé suivant l'une des revendications 15 à 16,
**caractérisé**
**en ce que** l'on utilise un mélange de particules de MnO₂ et de particules métalliques en Co ou en Sn ou en Zn ou en alliages d'au moins l'un de ces métaux pour les régions ( 14 ) métalliques de la surface de catalyseur.

18. Procédé suivant l'une des revendications 15 à 17,
**caractérisé**
**en ce que** l'on se rend maître par l'apport d'énergie du faisceau de gaz froid, de la surface spécifique, formant la surface de catalyseur, de la couche produite.

19. Utilisation d'une pièce suivant l'une des revendications 1 à 12, pour diminuer la teneur en ozone d'un gaz balayant la surface de catalyseur.
